# EUROPÄISCHE PATENTSCHRIFT

(11) **EP 4 206 085 B1**
(45) Veröffentlichungstag und Bekanntmachung des Hinweises auf die Patenterteilung: **01.07.2026**
(21) Anmeldenummer: 22150077.0
(22) Anmeldetag: 03.01.2022
(51) Int. Cl.: B65D 6/18, B65D 19/18, B65D 19/38

(54) **MEHRWEGTRANSPORTBEHÄLTER UMFASSEND EINE SEITENWAND MIT ORIENTIERUNGSSENSOR UND ZUGEHÖRIGE VERWENDUNG**
REUSABLE TRANSPORT CONTAINER COMPRISING A SIDE WALL WITH ORIENTATION SENSOR AND ASSOCIATED USE
RÉCIPIENT DE TRANSPORT RÉUTILISABLE POURVU DE PAROI LATÉRALE À CAPTEUR D'ORIENTATION ET UTILISATION ASSOCIÉE

(43) Veröffentlichungstag der Anmeldung: 05.07.2023
(73) Patentinhaber: Schoeller Allibert GmbH, 19057 Schwerin (DE)
(72) Erfinder: DEJANS, Frederik, 8860 Lendelede (BE)
(74) Vertreter: Winter, Brandl - Partnerschaft mbB

(56) Entgegenhaltungen:
- CN-A- 108 088 504
- KR-A- 20190 138 050
- US-A1- 2017 206 495
- US-A1- 2020 118 065
- US-B1- 10 408 489

## Beschreibung

### Technisches Gebiet

Die vorliegende Erfindung betrifft einen Mehrwegtransportbehälter mit klappbaren und / oder faltbaren Seitenwänden bzw. Seitenwandabschnitten, welche in eine aufgerichtete Stellung, in der die Seitenwände im Wesentlichen senkrecht zum Boden stehen, und in eine nicht-aufgerichtete Stellung, in der die Seitenwände umgeklappt oder zusammengefaltet sind, bringbar sind.

### Stand der Technik

Mehrwegtransportbehälter finden in weiten Bereichen der Industrie und Logistik Anwendung. Neben Mehrwegtransportbehältern mit starren Seitenwänden existieren auch solche, welche klappbare und / oder faltbare Seitenwände aufweisen.

Solche Mehrwegtransportbehälter mit klappbaren und / oder faltbaren Seitenwänden haben gegenüber Mehrwegtransportbehältern mit starren Seitenwänden den Vorteil, dass sie in einem leeren Zustand platzsparend gelagert und transportiert werden können, was Lager- und Transportkosten reduziert.

Um eine möglichst hohe Ausnutzung der Mehrwegtransportbehälter zu gewährleisten und darüber Logistikkosten gering zu halten, ist es notwendig, dass zu jedem Zeitpunkt bekannt ist, wie viele der Mehrwegtransportbehälter noch lagernd sind und wie viele Mehrwegtransportbehälter aktuell in Benutzung sind. Hierfür ist es aktuell notwendig, dass ein Mitarbeiter, beispielsweise ein Lagerist, die Mehrwegtransportbehälter manuell in ein System ein- und ausbucht.

Ein solches manuelles Buchen sorgt für Mehraufwand und erhöht die Personalkosten. Zusätzlich bietet es eine Fehlerquelle, die dazu führen kann, dass keine Mehrwegtransportbehälter lagernd sind, obwohl dies in dem System so hinterlegt ist. Dies kann zu Verzögerungen in Produktionsabläufen und damit zu erheblichen Kosten führen.

Die US 2020 118 065 A1 offenbart einen Logistikapparat und ein Verfahren zur Identifizierung eines leeren/ vollen Zustands des Logistikapparats. Unter dem leeren Zustand ist ein zusammengeklappter Zustand zu verstehen und unter dem vollen Zustand ist ein aufgeklappter Zustand zu verstehen. Konkret beinhaltet zumindest eine der Seitenwände ein erstes drahtloses Übertragungselement und der Boden ein drahtloses Empfangselement. Das Übertragungselement kann an das Empfangselement ein Signal senden. Eine maximale Übertragungsdistanz zwischen dem Übertragungselement und dem Empfangselement ist D. In dem vollen Zustand, also in dem aufgeklappten Zustand, ist die Distanz zwischen dem Übertragungselement und dem Empfangselement größer als D. Wenn das Empfangselement also kein Signal von dem Übertragungselement erhält/ empfängt, kann auf den vollen Zustand geschlossen werden. Wenn das Übertragungselement das Signal von dem Übertragungselement erhält, kann auf den leeren Zustand geschlossen werden. Hierfür ist eine Bestimmungseinrichtung ausgebildet, welche ein entsprechendes Voll-Signal oder ein Leer-Signal ausgibt.

Die US 2017 / 206 495 A1 offenbart eine faltbare wiederverwendbare Schachtel mit einer Erkennungseinheit, die vorgesehen und ausgebildet ist, ein Schachtel-leer-Signal auszugeben, wenn die Schachtel in einem gefalteten Zustand ist, und ein Schachtel-kann-gefüllt-sein-Signal auszugeben, wenn die Schachtel in einem dreidimensionalen, also einem aufgeklappten Zustand ist. Der erkannte Zustand kann an einen Server gesendet werden.

Die US 10 408 489 B1 offenbart generell eine Sensoreinheit zur Erfassung verschiedenster Kennwerte und zum Tracking von Logistikeinheiten. Als einen Sensor der Sensoreinheit offenbart die D3 einen Umgebungssensor, welcher Vibrationen und andere Bewegungen um den Sensor herum detektieren kann.

Auch die CN 108 088 504 A und die KR 2019 0138050 A offenbarten Sensoriken, welche einen Zustand eines Behälters, insbesondere ob sich der Behälter in einem aufgerichteten Zustand oder in einem zusammengeklappten Zustand befindet, zu detektieren.

Aufgabe der vorliegenden Erfindung ist es daher, eine Möglichkeit bereitzustellen, welche die obigen Nachteile behebt oder zumindest reduziert. Konkret ist es eine Aufgabe der vorliegenden Erfindung, eine Möglichkeit bereitzustellen, ein automatisches Überprüfen, wie viele Mehrwegtransportbehälter lagernd sind und wie viele Mehrwegtransportbehälter im Umlauf sind, zu gewährleisten, insbesondere den momentanen Zustand eines Mehrwegtransportbehälter bestimmen zu können.

Diese Aufgabe wird durch Merkmale des Anspruchs 1 gelöst. Vorteilhafte Weiterbildungen sind Gegenstand der Unteransprüche.

Konkret wird die Aufgabe gelöst durch einen Mehrwegtransportbehälter mit einem Boden und daran angeordneten klappbaren und / oder faltbaren Seitenwandabschnitten, welche in eine aufgerichtete Stellung, in der die Seitenwandabschnitte im Wesentlichen senkrecht zum Boden stehen, und in eine nicht-aufgerichtete Stellung, in der die Seitenwandabschnitte umgeklappt oder zusammengefaltet sind, bringbar sind. Der Mehrwegtransportbehälter beinhaltet ferner zumindest einen Sensor, der konfiguriert ist, zwischen der aufgerichteten Stellung und der nicht-aufgerichteten Stellung zumindest eines Seitenwandabschnitts zu unterscheiden. Weiter beinhaltet der Mehrwegtransportbehälter eine mit dem zumindest einen Sensor gekoppelte oder in diesen integrierte Sendeeinrichtung, die konfiguriert ist, entsprechend der vom Sensor detektierten Stellung unterschiedliche Signale auszugeben.

In anderen Worten beinhaltet der Mehrwegtransportbehälter den Boden und gelenkig an dem Boden angelenkte Seitenwandabschnitte. Die Seitenwandabschnitte sind ausgebildet, mittels Scharnieren in Relation zu dem Boden geklappt zu werden. Eine erste Klappendposition bildet die aufgerichtete Stellung, in welcher ein Winkel zwischen dem Boden und den Seitenwandabschnitten im Wesentlichen 90 ° beträgt. Wenn sich alle Seitenwandabschnitte in der ersten Klappendposition befinden, ist der Mehrwegtransportbehälter in einem Zustand, in dem er Material aufnehmen kann. Eine zweite Klappendposition bildet die nicht-aufgerichtete Stellung, in der die Seitenwandabschnitte vorzugweise im Wesentlichen parallel zu dem Boden angeordnet sind. Wenn sich alle Seitenwandabschnitte in der zweiten Klappendposition befinden, ist der Mehrwegtransportbehälter in einem Zustand, in dem er platzsparend transportiert und / oder gelagert werden kann. Der Mehrwegtransportbehälter beinhaltet den Sensor, wobei der Sensor detektiert, ob sich der zumindest eine Seitenwandabschnitte in der ersten Klappendposition oder der zweiten Klappendposition befindet. Der Sensor ist mit der Sendeeinrichtung versehen oder gekoppelt. Die Sendeeinrichtung ist ausgebildet, den von dem Sensor detektierten Zustand des Mehrwegtransportbehälters als das Signal auszugeben. Das Signal weist vorzugsweise zumindest zwei Signalzustände auf, wobei ein erster Signalzustand die erste Klappendposition und ein zweiter Signalzustand die zweite Klappendposition angibt / anzeigt.

Der Mehrwegtransportbehälter kann mehr als einen Sensor aufweisen, wobei es vorteilhaft sein kann, wenn der Mehrwegtransportbehälter pro Seitenwandabschnitt einen Sensor beinhaltet.

Kern der Erfindung ist demnach, den Mehrwegtransportbehälter mit den klappbaren und / oder faltbaren Seitenwandabschnitten mit dem Sensor auszubilden, wobei der Sensor detektiert, ob sich die Seitenwandabschnitte in einem eingeklappten oder aufgeklappten Zustand befinden.

Auf diese Weise kann anhand des Signals erkannt werden, ob sich der Mehrwegtransportbehälter in der nicht-aufgerichteten Stellung und damit lagernd oder in der aufgerichteten Stellung und damit in Benutzung befindet. Dies ermöglicht ein einfaches Abfragen einer Anzahl vorrätiger Mehrwegtransportbehälter, ohne dass ein Mitarbeiter dies manuell in einem System pflegen muss. So lässt sich einerseits ein Personalaufwand reduzieren und andererseits ein Risiko, dass falsche Lagerstände an Mehrwegtransportbehältern in dem System hinterlegt sind, minimieren.

In einem ersten Aspekt kann der Sensor ein Lagesensor sein, der in dem zumindest einen Seitenwandabschnitt ausgebildet ist.

In anderen Worten kann der zumindest eine Seitenwandabschnitt mit dem Sensor, welcher der Lagesensor ist, ausgebildet sein. Dabei kann der Sensor fest mit dem Seitenwandabschnitt verbunden sein. Anders ausgedrückt können der Sensor und der Seitenwandabschnitt so verbunden sein, dass die Orientierung des Sensors in einem montierten Zustand der Orientierung des Seitenwandabschnitts entspricht.

Der Sensor erkennt als der Lagesensor die Orientierung des Seitenwandabschnitts. Dabei ist eine erste Orientierung der aufgerichteten Stellung und eine zweite Orientierung der nicht-aufgerichteten Stellung zugeordnet. Auf diese Weise kann der Sensor als Lagesensor zwischen der aufgerichteten Stellung und damit der ersten Klappendposition und der nicht-aufgerichteten Stellung und damit der zweiten Klappendposition unterscheiden.

In einem weiteren Aspekt kann sich die Orientierungen des Lagesensors in der aufgerichteten Stellung des zumindest einen Seitenwandabschnitts und in der nicht-aufgerichteten Stellung des zumindest einen Seitenwandabschnitts um ungefähr 90 ° unterscheiden.

In anderen Worten kann sich die aufgerichtete Stellung des zumindest einen Seitenwandabschnitts um ungefähr 90 ° von der nicht-aufgerichteten Stellung des zumindest einen Seitenwandabschnitts unterscheiden. Da der zumindest eine Seitenwandabschnitt und der Lagesensor fest miteinander verbunden sein können, entspricht die Orientierungsänderung des Seitenwandabschnitts der Orientierungsänderung des Lagesensors.

Durch die deutliche Unterscheidung der aufgerichteten Stellung und der nicht-aufgerichteten Stellung der Seitenwandabschnitte bzw. des zumindest einen Seitenwandabschnitts ist eine zuverlässige Zustandsdetektion durch den Orientierungssensor gewährleistet.

In einem weiteren Aspekt kann der Sensor vollständig und ohne Überstand in dem Seitenwandabschnitt aufgenommen sein.

In anderen Worten kann der Sensor so in den Seitenwandabschnitt integriert sein, dass sich die Abmessungen des Seitenwandabschnitts nicht verändern.

Durch die vollständige Integration des Sensors in den Seitenwandabschnitt können die Seitenwandabschnitte geklappt und / oder gefaltet werden, ohne durch einen durch den Sensor verursachten Überstand in dem Klappen und / oder Falten behindert zu werden. Zusätzlich ist durch die vollständige Integration ein Beschädigungsrisiko des Sensors minimiert.

Die Seitenwandabschnitte bzw. die Seitenwände sind doppelwandig als eine Doppelwandung ausgebildet. Der zumindest eine Seitenwandabschnitt, der den Sensor beinhaltet, beinhaltet eine Sensoraufnahme innerhalb der Doppelwandung, die ausgebildet ist, den Sensor aufzunehmen.

In anderen Worten können die Seitenwandabschnitte bzw. die Seitenwände in einer Sandwichbauweise ausgebildet sein. Diese kann eine erste Deckschickt und eine zweite Deckschicht beinhalten, welche mittels einer Stützstruktur verbunden sind. **In** der Stützstruktur kann zwischen der ersten Deckschicht und der zweiten Deckschicht die Sensoraufnahme ausgebildet sein. Die Sensoraufnahme kann als ein Einschub ausgebildet sein, der den Sensor in Form des Lagesensors aufnimmt.

Durch das Ausbilden des Seitenwandabschnitts als Doppelwandung kann die Sensoraufnahme mit einfachen Werkzeugen und kostengünstig ausgebildet werden.

In einem weiteren Aspekt kann eine Öffnung der Sensoraufnahme an einer schmalen Kante des Seitenwandabschnitts ausgebildet sein. Unter der schmalen Kante ist eine der Kanten zu verstehen, bei denen es sich nicht um die Deckschichten der Doppelwandung handelt und welche vorzugsweise im Wesentlichen normal zu der ersten Deckschicht und der zweiten Deckschicht orientiert ist.

In einem weiteren Aspekt kann die Öffnung der Sensoraufnahme an einer Scharnierkante des Seitenwandabschnitts ausgebildet sein.

In anderen Worten weist die Sensoraufnahme die (vorzugsweise einzige) Öffnung auf, die auf die Abmessungen des Sensors abgestimmt ist. Die Öffnung ist dabei an der Scharnierkante des Seitenwandabschnitts ausgebildet. Unter Scharnierkante ist die Kante des Seitenwandabschnitts zu verstehen, die in dem Zustand wenn sich die Seitenwandabschnitte in der aufgerichteten Stellung befinden, dem Boden zugewandt ist. Anders ausgedrückt ist die Scharnierkante in der aufgerichteten Stellung im Wesentlichen parallel zu dem Boden orientiert. In nochmals anderen Worten ist die Scharnierkante die Kante des Seitenwandabschnitts, die in der aufgerichteten Stellung am weitesten von der Mehrwegtransportbehälteröffnung entfernt angeordnet ist. Vorzugsweise kann die Öffnung in der aufgerichteten Stellung durch den Boden verschlossen sein.

Durch eine solche Orientierung der Öffnung kann ein unbeabsichtigtes Entfernen oder Herausfallen des Sensors vermieden werden. Zusätzlich kann der Sensor auf diese Weise effektiv vor Beschädigungen geschützt werden.

In einem weiteren Aspekt kann eine Materialstärke der Doppelwandung, insbesondere eine Materialstärke von Deckschichten der Doppelwandung, in einem Bereich der Sensoraufnahme reduziert sein.

In anderen Worten können die Deckschichten der Doppelwandung der Seitenwandabschnitte in dem Bereich der Sensoraufnahme dünner ausgebildet sein als in einer übrigen Wandfläche der Seitenwandabschnitte.

Durch eine Reduzierung der Wandstärke kann eine Ansprechbarkeit bzw. eine Kommunikationsfähigkeit des Sensors erhöht werden. Weiterhin kann eine Sendeleistung des Sensors bzw. der Sendeeinrichtung des Sensors reduziert werden ohne Reduzierung eines Kommunikationsradius. Auf diese Weise kann der Energieverbrauch des Sensors effektiv reduziert werden.

In einem weiteren Aspekt kann in dem Bereich der Sensoraufnahme zumindest ein Durchgangsloch in der Deckschicht der Doppelwandung ausgebildet sein. Das zumindest eine Durchgangsloch ist dabei so gestaltet, dass der Sensor nicht aus der Sensoraufnahme durch das Durchgangsloch herausfallen kann bzw. herausgenommen werden kann.

Ein wesentlicher Aspekt der vorliegenden Erfindung betrifft die Befestigung des Sensors in der Sensoraufnahme. Erfindungsgemäß ist der Sensor mittels eines Adapters in der Sensoraufnahme fixiert.

Der Adapter ist vorgesehen und ausgebildet, den Sensor kraft- und / oder formschlüssig und / oder stoffschlüssig aufzunehmen. Eine sich daraus ergebende Sensor-Adapter-Einheit kann in die Sensoraufnahme des Mehrwegtransportbehälters eingesetzt sein.

Durch den Adapter ist ein leichtes montieren des Sensors gewährleistet. Zusätzlich kann der Adapter flexibel auf unterschiedliche Sensoren mit unterschiedlichen Abmessungen angepasst werden, ohne dass der Mehrwegtransportbehälter bzw. die Sensoraufnahme des Mehrwegtransportbehälters angepasst werden muss. Auf diese Weise ist es möglich, Kosten zu sparen, da bei einem Wechsel eines Sensormodells mit sich unterscheidenden Abmessungen ausschließlich der Adapter angepasst werden muss und nicht der ganze Mehrwegtransportbehälter mit der Sensoraufnahme. Auf diese Weise können Werkzeugkosten gespart werden.

In einem Aspekt kann der Adapter eine Positionierungshilfe aufweisen, durch welche der Adapter in ausschließlich einer definierten Einsetzorientierung in die Sensoraufnahme eingesetzt werden kann.

In anderen Worten kann der Adapter die Positionierungshilfe beinhalten, die durch ihre Geometrie dafür sorgt, dass der Adapter in genau einer Orientierung in die Sensoraufnahme eingesetzt werden kann. In nochmals anderen Worten kann der Adapter nach dem Poka Yoke Prinzip gestaltet sein.

Durch das Vorsehen einer Positionierungshilfe an dem Adapter ist gewährleistet, dass der Sensor ausschließlich in der definierten Einsetzorientierung in die Sensoraufnahme eingesetzt werden kann. Auf diese Weise kann effektiv verhindert werden, dass der Sensor in einer falschen Orientierung eingesetzt wird, was zu falschen Signalen des Sensors führen kann.

In einem weiteren Aspekt kann der Adapter formschlüssig in der Sensoraufnahme des zumindest einen Seitenwandabschnitts, vorzugsweise reversibel, verrasten.

In anderen Worten kann der Adapter mit Rastnasen bzw. Rasthaken ausgebildet sein, die in dafür vorgesehen Vorsprüngen der Sensoraufnahme verrasten. Die Rastnasen bzw. Rasthaken können dabei vorzugsweise elastisch bzw. federnd ausgebildet sein.

Durch eine Fixierung des Adapters in der Sensoraufnahme mit Rastnasen bzw. Rasthaken ist ein werkzeugloses Einsetzen des Sensors in die Sensoraufnahme gewährleistet, was einen Montageaufwand reduziert. Bei einer reversiblen Verrrastung kann der Sensor bzw. der Adapter mit dem darin enthaltenen Sensor zu Wartungs- und / oder Reparaturzwecken insbesondere zerstörungsfrei bzw. ohne eine Beschädigung des Mehrwegtransportbehälters oder des Adapters aus der Sensoraufnahme gelöst werden.

In einem weiteren Aspekt, der auf alle beschriebenen Varianten bzw. Aspekte angewendet werden kann, kann die Sensoraufnahme fluiddicht zu einem Innenraum des zumindest einen Seitenwandabschnitts innerhalb der Doppelwandung ausgebildet sein.

In anderen Worten kann die Sensoraufnahme ausschließlich mit einer den Mehrwegtransportbehälter umgebenden Umwelt verbunden sein und zu dem die Sensoraufnahme umgebenden Innenraum des doppelwandigen Seitenwandabschnitts abgeschlossen sein.

Auf diese Weise kann gewährleistet werden, dass Fluid, beispielsweise Wasser bei einer Reinigung des Mehrwegtransportbehälters, nicht durch die Sensoraufnahme in den Innenraum des Seitenwandabschnitts vordringt. Dies verhindert eine unerwünschte Gewichtszunahme des Mehrwegtransportbehälters durch das Fluid, Schwappbewegungen bei einem Transport sowie eine potenzielle Geruchsbelästigung, die durch das Fluid erzeugt werden könnte.

In einem weiteren Aspekt kann der Sensor mit einem Energiespeicher versehen sein.

In anderen Worten kann der Sensor einen Energiespeicher aufweisen oder mit einem Energiespeicher verbunden sein. Vorzugsweise kann es sich bei dem Energiespeicher um einen wieder aufladbaren Energiespeicher, beispielsweise in Form eines Akkus, handeln. Außerdem vorzugsweise kann eine Ladevorrichtung, vorzugsweise in Form eines Ladesteckers oder Ladeanschlusses, des Energiespeichers so angeordnet sein, dass der Energiespeicher aufgeladen werden kann, ohne den Sensor aus der Sensoraufnahme entfernen zu müssen.

Durch das Vorsehen eines Energiespeichers kann der Mehrwegtransportbehälter frei bewegt und positioniert werden, ohne dass auf eine statische Energieversorgung, beispielsweise in Form eines Kabels, Rücksicht genommen werden muss.

In einem weiteren Aspekt kann der Sensor mit einem drahtlosen Kommunikationsmodul ausgebildet sein.

In anderen Worten kann der Sensor ein drahtloses Kommunikationsmodul aufweisen oder mit einem drahtlosen Kommunikationsmodul verbunden sein. Das drahtlose Kommunikationsmodul kann die Sendeeinrichtung ausbilden oder dieser nachgeschaltet sein. Das drahtlose Kommunikationsmodul kann vorgesehen und ausgebildet sein, die von dem Sensor detektierte Stellung und / oder das von der Sendeeinrichtung ausgegebene Signal drahtlos zu Kommunizieren. Hierbei können alle gängigen drahtlosen Kommunikationsarten verwendet werden. Beispiele für mögliche drahtlose Kommunikationsarten sind Bluetooth, IEEE 802.11 Mobilfunk oder dergleichen.

Durch das drahtlose Kommunikationsmodul kann die von dem Sensor detektierte Stellung drahtlos übermittelt werden, so dass der Mehrwegtransportbehälter frei bewegt und positioniert werden kann.

In einem weiteren Aspekt kann der Sensor eine detektierte Stellung mittels des Kommunikationsmoduls an eine externe Vorrichtung kommunizieren.

In anderen Worten kann das Kommunikationsmodul die detektierte Stellung drahtlos an eine externe Vorrichtung mittels eines (Funk-) Signals senden, wobei es sich bei der Vorrichtung vorzugsweise um einen Server handelt. Die Vorrichtung kann vorzugsweise anhand des übermittelten Signals bestimmen, wie viele Mehrwegtransportbehälter sich in einem lagernden Zustand befinden und wie viele der Mehrwegtransportbehälter sich in einem befüllten Zustand befinden.

In einem weiteren Aspekt kann die detektierte Stellung in einem definierten Intervall an die externe Vorrichtung kommuniziert werden.

In anderen Worten kann das drahtlose Kommunikationsmodul die detektierte Stellung in einem definierten Zeitabstand an die externe Vorrichtung kommunizieren. Beispielsweise kann das drahtlose Kommunikationsmodul alle dreißig Sekunden, alle zehn Minuten oder alle 2 Stunden die detektierte Stellung an die externe Vorrichtung kommunizieren.

Durch das Senden der detektierten Stellung in definierten Intervallen kann Energie gespart werden, was dafür sorgt, dass der Sensor länger ohne Wartung autark arbeiten kann. Das Intervall kann dabei auf den Einsatzzweck bzw. die Einsatzumgebung des Mehrwegtransportbehälters abgestimmt sein.

In einem weiteren Aspekt kann der Sensor in einem dem Boden zugewandten Drittel des zumindest einen Seitenwandabschnitts, in welchem der Sensor ausgebildet ist, angeordnet sein.

Ein weiterer Aspekt der vorliegenden Erfindung betrifft die Verwendung eines Adapters zur Fixierung eines Lagesensors in einem klappbaren und / oder faltbaren Seitenwandabschnitt eines Mehrwegtransportbehälters, um zu ermitteln, ob sich der Seitenwandabschnitt des Mehrwegtransportbehälters in der aufgerichteten Stellung oder in der nicht-aufgerichteten Stellung befindet. Aus diesem ermittelten Wert des Lagesensors kann dann bestimmt werden, in welchem Zustand sich der Mehrwegtransportbehälter befindet und er beispielsweise der Logistik zur Verfügung steht.

### Kurzbeschreibung der Figuren

Fig. 1 ist eine perspektivische Ansicht einer ersten Ausführungsform eines erfindungsgemäßen Mehrwegtransportbehälters mit Seitenwänden in einer aufgerichteten Stellung;
Fig. 2 ist eine perspektivische Ansicht der ersten Ausführungsform des erfindungsgemäßen Mehrwegtransportbehälters mit den Seitenwänden, wobei eine der Seitenwände in einer nicht-aufgerichteten Stellung ist;
Fig. 3 ist eine vergrößerte schematische Darstellung eines Klappvorgangs des Seitenwandabschnitts, welche einen Sensor beinhaltet;
Fig. 4 ist eine perspektivische Ansicht einer zweiten Ausführungsform des erfindungsgemäßen Mehrwegtransportbehälters,
Fig. 5 ist eine erste Darstellung einer zweiten Ausführungsform mit einem Adapter, der vorgesehen und ausgebildet ist, den Sensor in dem Seitenwandabschnitt zu fixieren;
Fig. 6 ist eine zweite Darstellung einer zweiten Ausführungsform, die einen Einsetzvorgang des Adapters in den Seitenwandabschnitt veranschaulicht;
Fig. 7 ist eine Darstellung eines Verrastmechanismus des Adapters in einer Sensoraufnahme des Seitenwandabschnitts der zweiten Ausführungsform;
Fig. 8 ist eine Darstellung des Adapters und des Sensors in einem Zustand, in dem der Sensor und der Adapter getrennt sind;
Fig. 9 ist eine Darstellung des Adapters und des Sensors in einem Zustand, in dem der Sensor in den Adapter eingesetzt ist;
Fig. 10 ist eine Schnittdarstellung des Adapters und des Sensors entlang der Linie A-A in Fig. 9;
Fig.11 ist eine erste Darstellung einer nicht erfindungsgemäßen, dritten Ausführungsform in einer ersten Variante, wobei der Sensor an dem Seitenwandabschnitt montiert ist;
Fig. 12 ist eine zweite Darstellung der dritten Ausführungsform in der ersten Variante, wobei der Sensor nicht an dem Seitenwandabschnitt montiert ist (demontierter Zustand);
Fig. 13 ist eine erste Darstellung der dritten Ausführungsform in einer zweiten Variante;
Fig. 14 ist eine zweite Darstellung der dritten Ausführungsform in der zweiten Variante;
Fig. 15 ist eine erste Darstellung der dritten Ausführungsform in einer dritten Variante;
Fig. 16 ist eine zweite Darstellung der dritten Ausführungsform in der dritten Variante, wobei der Sensor nicht an dem Seitenwandabschnitt montiert ist (demontierter Zustand);
Fig. 17 ist eine dritte Darstellung der dritten Ausführungsform in der dritten Variante;
Fig. 18 ist eine erste Darstellung der dritten Ausführungsform in einer vierten Variante;
Fig. 19 ist eine zweite Darstellung der dritten Ausführungsform in der vierten Variante, wobei der Sensor nicht an dem Seitenwandabschnitt montiert ist (demontierter Zustand);
Fig. 20 ist eine erste Darstellung einer nicht erfindungsgemäßen, vierten Ausführungsform;
Fig. 21 ist eine zweite Darstellung der vierten Ausführungsform, wobei der Sensor nicht an dem Seitenwandabschnitt montiert ist (demontierter Zustand); und
Fig.22 ist eine dritte Darstellung der vierten Ausführungsform. Beschreibung der Ausführungsbeispiele Nachstehend werden Ausführungsbeispiele der vorliegenden Erfindung auf der Basis der zugehörigen Figuren beschrieben.

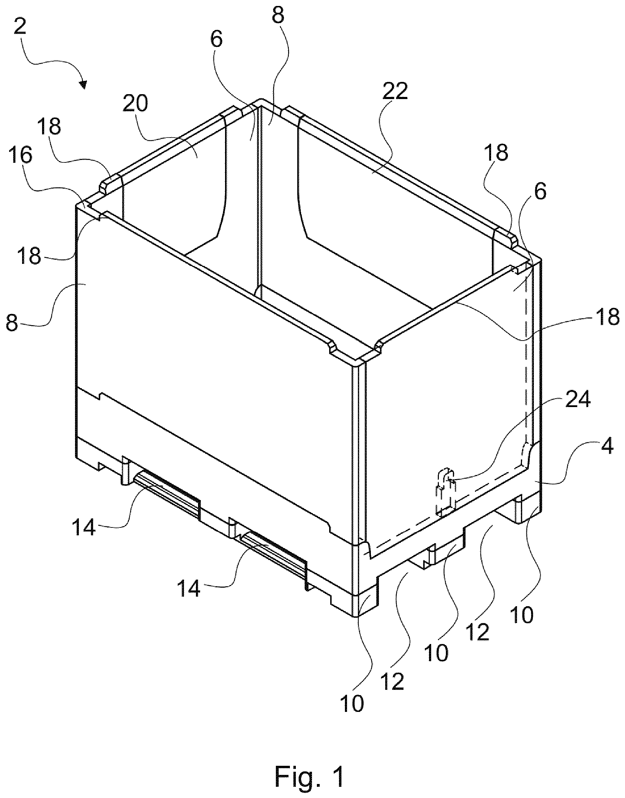

Als erstes wird anhand von Fig. 1 bis Fig. 4 ein erfindungsgemäßer Mehrwegtransportbehälter 2 in einer allgemeinen Ausführungsform beschrieben.

Fig. 1 zeigt den erfindungsgemäßen, insbesondere aus Kunststoff gefertigten, Mehrwegtransportbehälter 2 einer ersten Ausführungsform mit einem rechteckigen Boden 4 und jeweils zwei gelenkig an dem Boden 4 anscharnierten ersten kurzen Seitenwänden 6 und zweiten langen Seitenwänden 8. Die ersten kurzen Seitenwände 6 sind dabei an kurzen Seiten des Bodens 4 anscharniert. Die zweiten langen Seitenwände 8 sind dabei an langen Seiten des Bodens 4 anscharniert. In einer aufgerichteten Stellung erstrecken sich die ersten Seitenwände 6 und die zweiten Seitenwände 8 im Wesentlichen senkrecht von dem Boden 4 weg. Bei den ersten Seitenwänden 6 und den zweiten Seitenwänden 8 handelt es sich um doppelwandige erste bzw. zweite Seitenwände 6, 8. Anders ausgedrückt beinhalten die ersten Seitenwände 6 und die zweiten Seitenwände 8 zwei Deckflächen und eine Stützstruktur, welche die beiden Deckflächen verbindet.

Der Boden beinhaltet Standkufen 10, die in Richtung der langen Seite des Bodens 4 ausgerichtet / orientiert sind. Zwischen den Standkufen 10 sind erste Gabelöffnungen 12 ausgebildet. Die ersten Gabelöffnungen 12 sind dabei so ausgebildet, dass der Mehrwegtransportbehälter 2 mittels eines Gabelstaplers, eines Hubwagens oder Ähnlichem aufgenommen und transportiert werden kann. An den langen Seiten des Bodens 4 sind zweite Gabelöffnungen 14 ausgebildet.

An einer von dem Boden 4 abgewandten Seite der ersten Seitenwände 6 und der zweiten Seitenwände 8 ist ein Öffnungsrand 16 ausgebildet. Der Öffnungsrand 16 umschließt eine Öffnung des Mehrwegtransportbehälters 2. An dem Öffnungsrand 16 sind Rastkanten 18 ausgebildet, die sich von dem Öffnungsrand 16 in Richtung weg von dem Boden 4 erstrecken. Durch die Rastkanten 18 wird ein verrutschsicheres Stapeln mehrerer baugleicher Mehrwegtransportbehälter 2 ermöglicht.

In einer der ersten Seitenwände 6 ist mittig eine erste kleine Klappe 20 ausgebildet. Die erste Klappe 20 erstreckt sich von dem Öffnungsrand 16 ausgehend ungefähr über eine halbe Höhe der ersten Seitenwand 6. Die erste Klappe 20 ist an einer zu dem Boden 4 orientierten Kante an der ersten Seitenwand 6 anscharniert. In einer der zweiten Seitenwände 8 ist eine zweite große Klappe 22 ausgebildet. Die zweite Klappe 22 erstreckt sich von dem Öffnungsrand 16 ausgehend ungefähr über eine halbe Höhe der zweiten Seitenwand 8. Die zweite Klappe 22 ist an einer zu dem Boden 4 orientierten Kante an der zweiten Seitenwand 8 anscharniert.

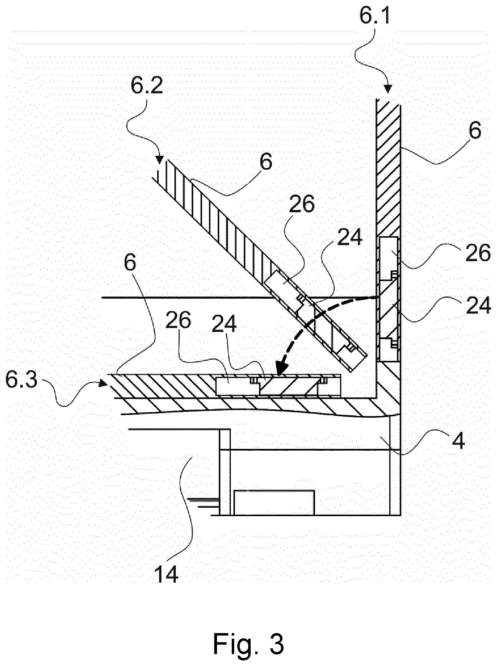

In der ersten Ausführungsform ist in der ersten Seitenwand 6, welche keine erste Klappe 20 enthält, ein Sensor 24 ausgebildet. Bei dem Sensor 24 handelt es sich in der ersten Ausführungsform um einen Lagesensor bzw. einen Orientierungssensor. Der Sensor 24 ist in einem dem Boden 4 zugewandten Abschnitt der ersten Seitenwand 6 ausgebildet. Bevorzugt ist der Sensor 24 in einer Sensoraufnahme 26 (vgl. Fig. 3) in der ersten Seitenwand 6 aufgenommen. Aufgrund der doppelwandigen Ausführung der ersten Seitenwand 6 ist die Sensoraufnahme zwischen Deckflächen der ersten Seitenwand 6 ausgebildet.

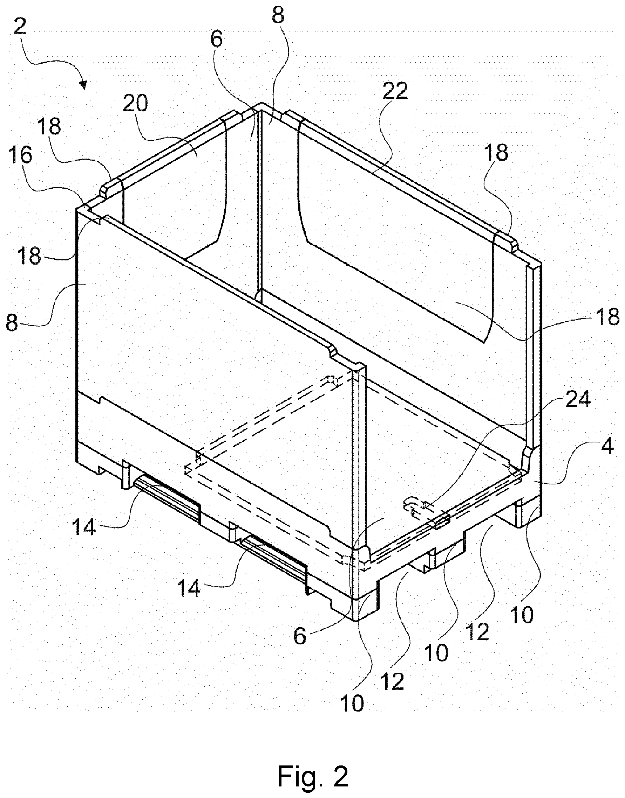

Fig. 2 zeigt den erfindungsgemäßen Mehrwegtransportbehälter 2 der ersten Ausführungsform, wobei die erste Seitenwand 6, welche den Sensor 24 beinhaltet, sich in einer nicht-aufgerichteten Stellung befindet. In anderen Worten ist die erste Seitenwand 6 eingeklappt. In dieser nicht-aufgerichteten Stellung ist die erste Seitenwand 6 im Wesentlichen parallel zu dem Boden 4 orientiert.

In einer Transportkonfiguration des Mehrwegtransportbehälters 2 sind beide der ersten Seitenwände 6 und beide der zweiten Seitenwände 8 im Wesentlichen parallel zu dem Boden 4 ausgerichtet / orientiert. In der darstellten ersten Ausführungsform sind die zweiten Seitenwände 8 weiter von dem Boden 4 distanziert anscharniert als die ersten Seitenwände 6. Auf diese Weise können die zweiten Seitenwände 8 auf die ersten Seitenwände 6 geklappt werden und sowohl die ersten Seitenwände 6 als auch die zweiten Seitenwände 8 sind in der nicht-aufgerichteten Stellung bzw. in der Transportkonfiguration im Wesentlichen parallel zu dem Boden 4 ausgerichtet.

Fig. 3 zeigt eine schematische Darstellung eines Klappvorgangs der ersten Seitenwand 6. Zur Veranschaulichung ist die erste Seitenwand 6 in drei unterschiedlichen Stellungen dargestellt. Hierbei ist die erste Seitenwand 6 in der (vollständig) aufgerichteten Stellung 6.1, die erste Seitenwand 6 während des Klappvorgangs 6.2 und die erste Seitenwand 6 in der nicht-aufgerichteten Stellung 6.3 dargestellt. Die erste Seitenwand 6 in der (vollständig) aufgerichteten Stellung 6.1 ist im Wesentlichen normal zu dem Boden 4 ausgerichtet. Die erste Seitenwand 6 wird dann bei dem Klappvorgang mittels eines Gelenks (nicht dargestellt) das den Boden 4 und die erste Seitenwand 6 verbindet, um die Gelenkachse geklappt. In der nicht-aufgerichteten Stellung 6.3 ist die erste Seitenwand 6 im Wesentlichen parallel zu dem Boden orientiert und liegt auf dem Boden 4 auf. Die erste Seitenwand 6 während des Klappvorgangs 6.2 ist eine Stellung zwischen den beiden Endwerten aufgerichtete Stellung 6.1 und nicht-aufgerichtete Stellung 6.3.

Die erste Seitenwand 6 weist die Sensoraufnahme 26 auf, die vorgesehen und ausgebildet ist den Sensor 24 aufzunehmen. Der Sensor 24 ist vorzugsweise vollständig von der Sensoraufnahme 26 umschlossen. Bei der Sensoraufnahme 26 handelt es sich in der hier dargestellten ersten Ausführungsform mit dem doppelwandig ausgebildeten Seitenwandabschnitt bzw. den doppelwandig ausgebildeten ersten Seitenwänden 6 und zweiten Seitenwänden 8 um einen Hohlraum in der ersten Seitenwand 6. Die Sensoraufnahme 26 ist hierbei auf Abmessungen des Sensors 24 abgestimmt.

Der Sensor 24 ist so in der Sensoraufnahme 26 fixiert, dass eine Bewegung des Sensors 24 relativ zu der den Sensor 24 beinhaltenden ersten Seitenwand 6 effektiv verhindert ist. In anderen Worten entspricht eine Sensororientierung zu jedem Zeitpunkt einer Seitenwandorientierung der ersten Seitenwand. Wenn sich also die erste Seitenwand 6 in der aufgerichteten Stellung 6.1 befindet, befindet sich auch der Sensor 24 in der aufgerichteten Stellung 6.1.

Dies kann von dem Sensor 24 detektiert und mittels einer Sendeeinrichtung kommuniziert werden. Vorzugsweise handelt es sich bei der Sendeeinrichtung um ein in dem Sensor 24 fest verbautes drahtloses Kommunikationsmodul. Wenn der Sensor 24 also detektiert, dass sich der Sensor 24 und damit die erste Seitenwand 6 in der aufgerichteten Stellung 6.1 befinden, kann diese Stellung mittels der Sendeeinrichtung kommuniziert werden.

Wenn die aufgerichtete Stellung 6.1 kommuniziert wird, kann daraus geschlossen werden, dass sich der Mehrwegtransportbehälter 2 in Verwendung befindet bzw. befüllt ist. Anders ausgedrückt kann daraus geschlossen werden, dass der Mehrwegtransportbehälter 2 sich nicht in einem Lager bzw. lagernden Zustand befindet und damit nicht zur Verfügung steht.

Wenn sich die erste Seitenwand 6 in der nicht-aufgerichteten Stellung 6.3 befindet, befindet sich auch der Sensor 24 in der nicht-aufgerichteten Stellung 6.3. Dies kann von dem Sensor 24 detektiert und mittels der Sendeeinrichtung kommuniziert werden. Wenn der Sensor 24 also detektiert, dass sich der Sensor 24 und damit die erste Seitenwand in der nicht-aufgerichteten Stellung 6.3 befinden, kann diese Stellung mittels der Sendeeinrichtung kommuniziert werden. Wenn die nicht-aufgerichtete Stellung 6.3 kommuniziert wird, kann daraus geschlossen werden, dass sich der Mehrwegtransportbehälter 2 in dem Lager bzw. lagernden Zustand befindet. Anders ausgedrückt kann daraus geschlossen werden, dass der Mehrwegtransportbehälter 2 sich nicht in Verwendung befindet und damit zur Verfügung steht.

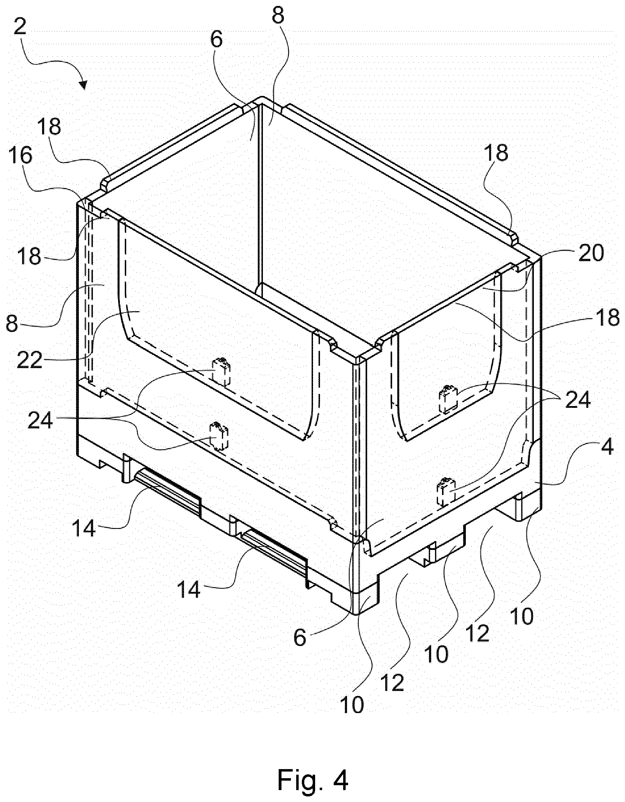

Der in Fig. 4 dargestellte Mehrwegtransportbehälter 2 beinhaltet neben dem Sensor 24 in der ersten Seitenwand 6 auch einen Sensor 24 in der zweiten Seitenwand 8. Ferner beinhaltet der in Fig. 4 dargestellte Mehrwegtransportbehälter Sensoren 24 in der ersten Klappe 20 und in der zweiten Klappe 22.

Jeder der Sensoren 24 kommuniziert vorzugsweise neben seiner aktuellen Stellung auch seine Verbauposition bzw. eine individuelle Kennung, die der Verbauposition zugeordnet werden kann. Auf diese Weise lässt sich nicht nur erkennen, ob der Mehrwegtransportbehälter 2 sich in Verwendung oder in dem lagernden Zustand befindet, sondern es kann durch die Stellung der ersten Klappe 20 und der zweiten Klappe 22 darauf geschlossen werden, ob der Mehrwegtransportbehälter 2 aktuell beladen bzw. entladen wird oder ob sich der Mehrwegtransportbehälter 2 befüllt in einer ruhenden Situation befindet. Somit kann aus der der übermittelten Stellung der ersten Klappe 20 und der zweiten Klappe 22 geschlossen werden, in welchem Verwendungszustand sich der Mehrwegtransportbehälter 2 befindet, wenn sich die ersten Seitenwände 6 bzw. zweiten Seitenwände 8 in der aufgerichteten Position befinden.

Durch ein Vorsehen des Sensors 24 in sowohl der ersten Seitenwand 6 als auch der zweiten Seitenwand 8 kann eine Redundanz erzielt werden, wodurch sich eine Zustandsbestimmung des Mehrwegtransportbehälters 2 zuverlässiger und weniger fehleranfällig gestalten lässt. Zusätzlich kann mittels mehrerer Sensoren 24 auch detektiert werden, ob ein Mehrwegtransportbehälter 2 einen Defekt aufweist. So kann, falls mehrere Sensoren 24, die sowohl in ersten Seitenwänden 6 als auch in zweiten Seitenwänden 8 eines definierten Mehrwegtransportbehälters 2 voneinander verschiedenen Stellungen kommunizieren, daraus geschlossen werden, dass eine der Seitenwände 6,8 möglicherweise kollabiert ist und möglicherweise Ladung, welche in dem Mehrwegtransportbehälter 2 gelagert ist, austritt.

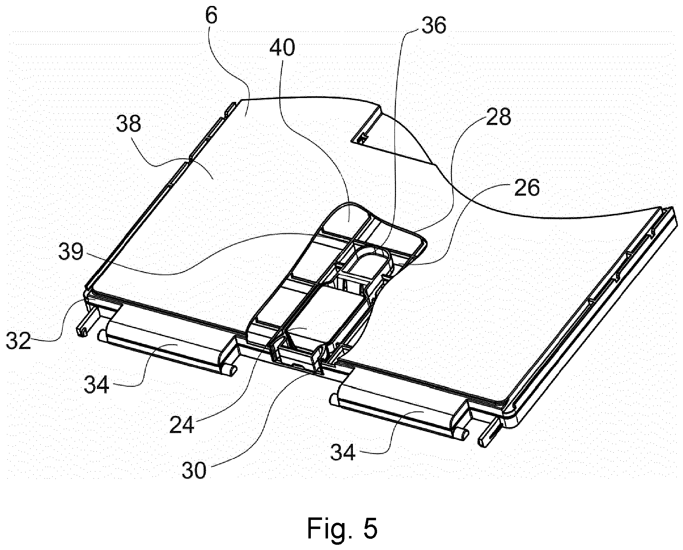

Nachfolgend wird anhand von Fig. 5 bis Fig. 10 der Mehrwegtransportbehälter 2 mit einem Adapter 36 beschrieben. Auf die erneute Beschreibung von Elementen, die denen der allgemeinen Ausführungsform (Fig. 1 bis Fig. 4) entsprechen, wird verzichtet. Es wird im Folgenden insbesondere auf Unterschiede zu der allgemeinen Ausführungsform eingegangen. Es wird exemplarisch die Befestigung des Sensors 24 an der ersten Seitenwand 6 beschrieben. Der Sensor 24 kann jedoch an jedem beliebigen Seitenwandabschnitt des Mehrwegtransportbehälters 2 befestigt sein.

Fig. 5 zeigt eine erste Seitenwand 6 in einer zweiten Ausführungsform. Die erste Seitenwand 6 in Fig. 5 ist mit einem (grafischen) Ausbruch 28 zu einer besseren Veranschaulichung in einem Bereich der Sensoraufnahme 26 dargestellt. Eine Sensoraufnahmeöffnung 30 ist in einer Scharnierkante 32 der ersten Seitenwand ausgebildet. An der Scharnierkante 32 sind Scharnierelemente 34 ausgebildet, die ein Klappen der ersten Seitenwand 6 in Relation zu dem Boden 4 ermöglichen. Die Sensoraufnahme 26 der zweiten Ausführungsform ist vorgesehen und ausgebildet, einen Adapter 36 insbesondere formschlüssig aufzunehmen.

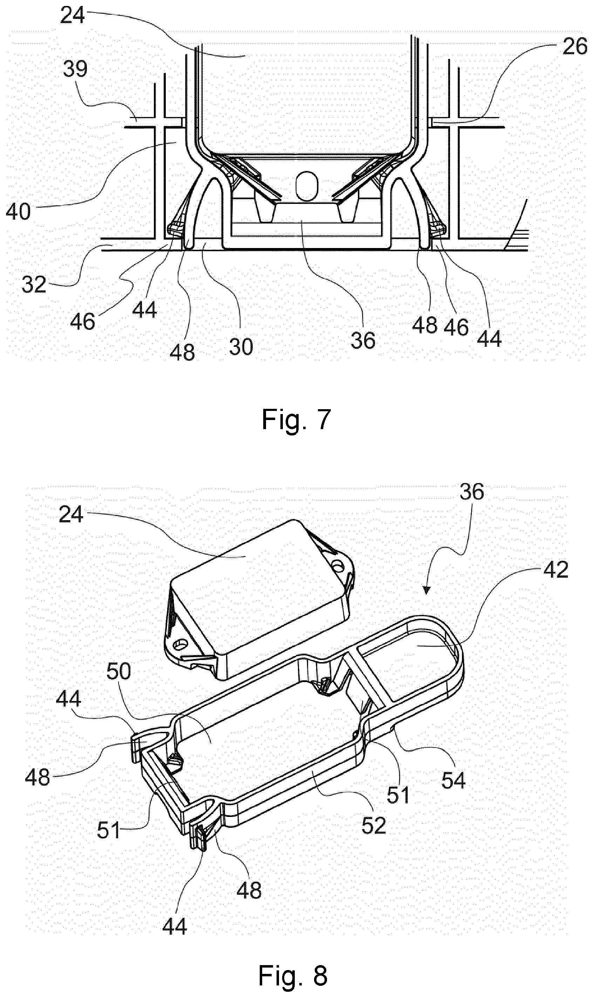

Der Adapter 36 ist vorgesehen und ausgebildet, den Sensor 24 aufzunehmen. Der Adapter 36 ist in Fign. 8 bis 10 näher dargestellt und wird an entsprechender Stelle näher beschrieben. Der Adapter 36 schließt in einem eingesetzten Zustand im Wesentlichen bündig mit der Scharnierkante 32 ab. Ferner ist in Fig. 5 in dem Ausbruch 28 ein innerer Aufbau der ersten Seitenwand 6 ersichtlich. Die erste Seitenwand 6 beinhaltet eine erste Deckschicht 38, eine zweite Deckschicht 40 und eine Stützstruktur 39, wobei die Stützstruktur die erste Deckschicht 38 und die zweite Deckschicht 40 miteinander verbindet.

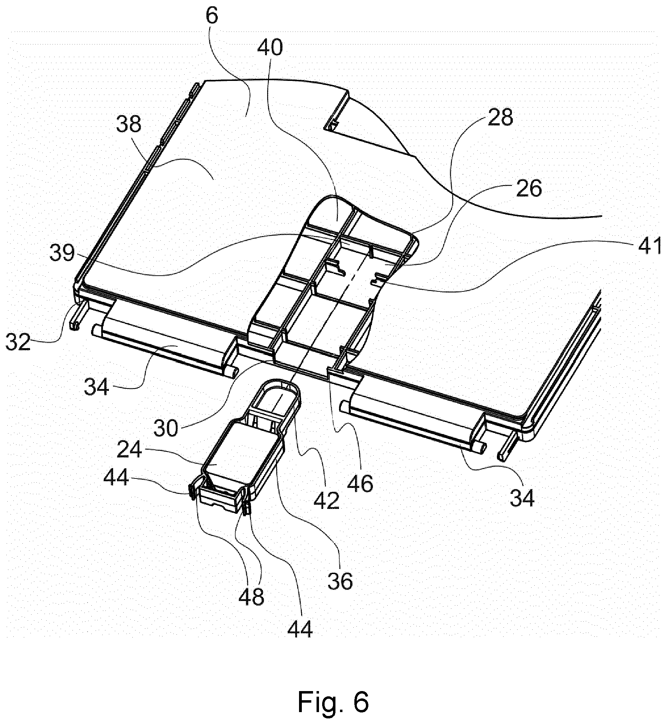

Fig. 6 veranschaulicht einen Einsetzvorgang des Adapters 36 in die Sensoraufnahme 26. Der Adapter 36, in welchem der Sensor 24 insbesondere formschlüssig aufgenommen ist, wird über die Sensoraufnahmeöffnung 30, welche sich in der Scharnierkante 32 befindet, in die Sensoraufnahme 26 eingeführt. **In** der Sensoraufnahme 26 ist zumindest ein Positionierungssteg 41 ausgebildet, der mit einer an dem Adapter 36 ausgebildeten Positionierungshilfe 42 derart zusammenwirkt, dass der Adapter 36 in genau einer definierten Einsetzorientierung in die Sensoraufnahme 26 eingesetzt werden kann. An der von der Positionierungshilfe 42 abgewandten Seite des Adapters 36 sind Rasthaken 44 ausgebildet, die vorgesehen und ausgebildet sind, in einem Rastabschnitt 46 der Sensoraufnahme 26 zu verrasten.

Fig. 7 zeigt eine vergrößerte Ansicht der Rasthaken 44 des Adapters 36 in einem Zustand, in dem die Rasthaken 44 in einem Rastabschnitt 46 der Sensoraufnahme 26 verrastet sind. Die Rasthaken 44 sind mit Federhebeln 48 verbunden bzw. stoffeinstückig ausgebildet. Die Federhebel 48 drücken die Rasthaken 44 so hinter die Rastabschnitte 46 der Sensoraufnahme 26, dass der Adapter 36 formschlüssig in der Sensoraufnahme 26 fixiert ist. Durch ein Zusammendrücken der Federhebel 48 durch einen Bediener können die Rasthaken in Richtung der Sensoraufnahmeöffnung 30 bewegt werden und der Adapter 36 kann dann aus der Sensoraufnahme 26 entfernt werden.

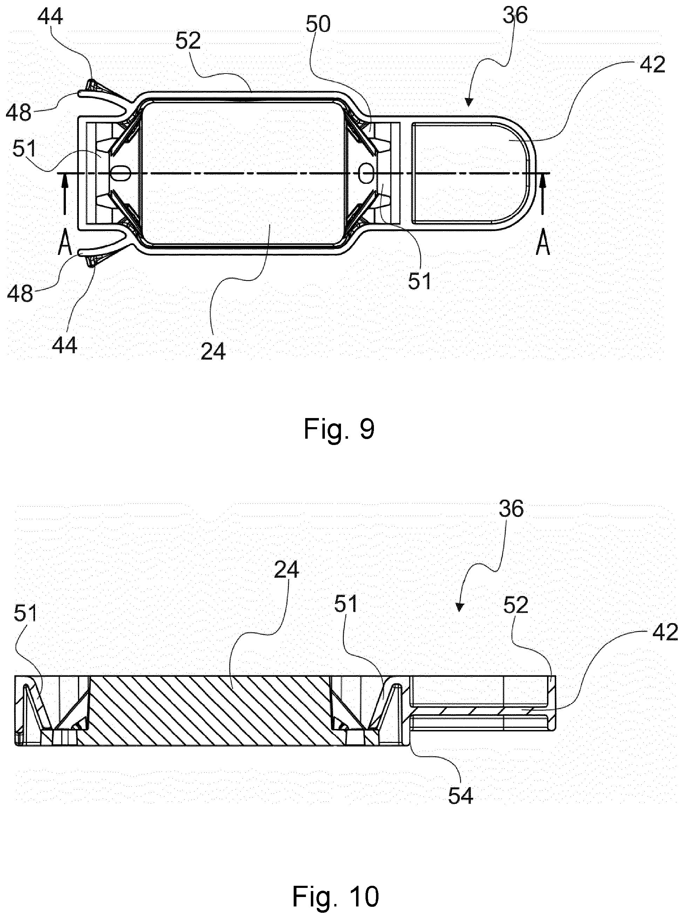

Fig. 8, Fig. 9 und Fig. 10 zeigen den Adapter 36 und den Sensor 24, wobei Fig. 10 eine Schnittansicht entlang der Linie A-A in Fig.9 darstellt. Der Adapter 36 beinhaltet einen Adapterboden 50 und eine sich umlaufend von dem Adapterboden 50 im Wesentlichen senkrecht weg erstreckende Adapterseitenwand 52. Ferner beinhaltet der Adapter 36 eine Sensorrastgeometrie 51, welche den Sensor 24 formschlüssig in dem Adapter 36 fixiert. An der Adapterseitenwand sind an einem ersten Ende des Adapters 36 die zwei Federhebel 48 mit den Rasthaken 44 ausgebildet, wobei eine Funktion der Federhebel 48 mit den Rasthaken 44 bereits mit Hilfe von Fig. 7 erläutert wurde.

An einem zweiten Ende des Adapters 36, welches dem ersten Ende des Adapters 36 in einer Adapterlängsrichtung gegenüberliegt, ist die Positionierungshilfe 42 ausgebildet. In anderen Worten ist die Positionierungshilfe 42 an einer von den Rasthaken 44 abgewandten Seite des Adapters ausgebildet. Im Bereich der Positionierungshilfe 42 ist der Adapterboden 50 hochversetzt. Anders ausgedrückt beinhaltet der Adapterboden 50 in dem Bereich der Positionierungshilfe 42 eine Stufe 54 in Richtung einer Erstreckungsrichtung der Adapterseitenwände 52. Ferner ist die Adapterseitenwand 52 im Beriech der Positionierungshilfe 42 eingezogen gestaltet. In anderen Worten ist ein Abstand zwischen sich gegenüberliegenden Abschnitten der Adapterseitenwände 52 in dem Bereich der Positionierungshilfe 42 reduziert.

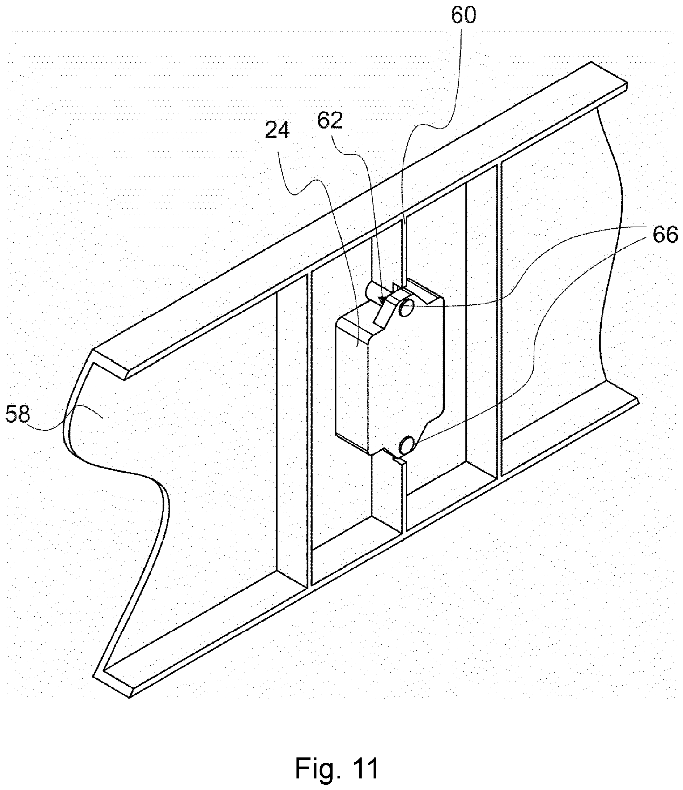

Nachfolgend wird anhand von Fig. 11 bis Fig. 19 ein nicht erfindungsgemäßer Mehrwegtransportbehälter 2 mit einer Aufnahmegeometrie 56, welche vorgesehen und ausgebildet ist, den Sensor 24 in genau einer bestimmten Orientierung aufzunehmen, beschrieben. Auf die erneute Beschreibung von Elementen, die denen der allgemeinen Ausführungsform entsprechen, wird verzichtet. Es wird im Folgenden insbesondere auf Unterschiede zu der allgemeinen Ausführungsform eingegangen. Es wird exemplarisch die Befestigung des Sensors 24 an der ersten Seitenwand 6 beschrieben. Der Sensor 24 kann jedoch an jedem beliebigen Seitenwandabschnitt des Mehrwegtransportbehälters 2 befestigt sein.

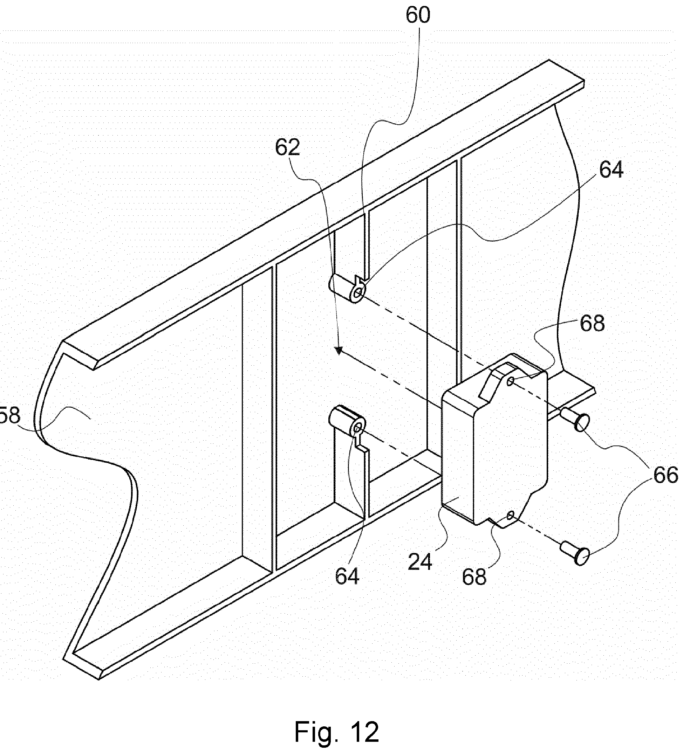

Fig. 11 und Fig. 12 zeigen die erste Seitenwand 6 in einer dritten Ausführungsform in einer ersten Variante, wobei Fig. 11 den Sensor 24 in einem an die erste Seitenwand 6 montierten Zustand zeigt und Fig. 12 den Sensor in einem von der ersten Seitenwand 6 demontierten Zustand zeigt. Die erste Seitenwand 6 beinhaltet eine Wandfläche 58 und Versteifungselemente 60. Die Wandfläche 58 und die Versteifungselemente 60 sind vorzugsweise einstückig ausgebildet. In einer ersten Variante beinhalten die Versteifungselemente 60 eine Aufnahmegeometrie 62, welche vorgesehen und ausgebildet ist, den Sensor 24 aufzunehmen. Bevorzugt liegt der Sensor 24 dabei plan an der Wandfläche 58 an. Die Aufnahmegeometrie 62 der ersten Variante beinhaltet insbesondere zwei Gewindelöcher 64, welche in den Versteifungselementen 62 ausgebildet sind. Der Sensor 24 wird mittels Schrauben 66, die in die Gewindelöcher 64 geschraubt werden, in der Aufnahmegeometrie 62 fixiert. Konkret sind die Schrauben 66 durch Sensordurchgangslöcher 68 des Sensors 24 in den Gewindelöchern 64 verschraubt. Ein Abstand der Gewindelöcher 64 entspricht einem Abstand der Sensordurchgangslöcher 68.

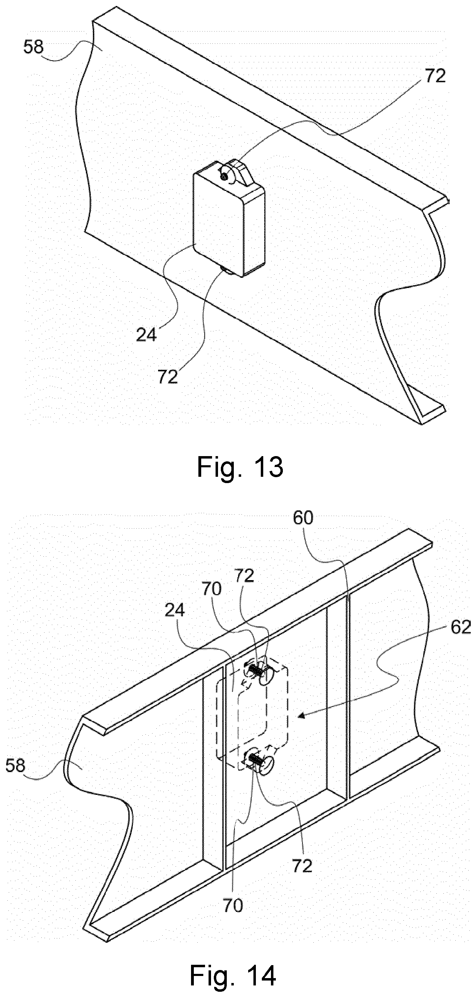

Fig. 13 und Fig. 14 zeigen die erste Seitenwand 6 in der dritten Ausführungsform in einer zweiten Variante, wobei Fig. 13 eine Ansicht ist, die den an einer von den Versteifungselementen 60 abgewandten Seite der Wandfläche 58 fixierten Sensor 24 zeigt und Fig. 14 die Aufnahmegeometrie 62 von einer den Versteifungselementen 60 zugewandten Seite der Wandfläche 58 zeigt. Die Aufnahmegeometrie 62 der zweiten Variante beinhaltet im Wesentlichen zwei Seitenwanddurchgangslöcher 70. Ein Abstand der Seitenwanddurchgangslöcher 70 entspricht dem Abstand der Sensordurchgangslöcher 68. Der Sensor 24 wird mittels Befestigungselementen in Form von Rastnieten 72, welche jeweils durch das Seitenwanddurchgangsloch 70 und das Sensordurchgangsloch 68 geführt sind, an dem Seitenwandabschnitt fixiert. Alternative Befestigungselemente sind eine Schraube-Mutter-Verbindung, konventionelles Nieten oder dergleichen.

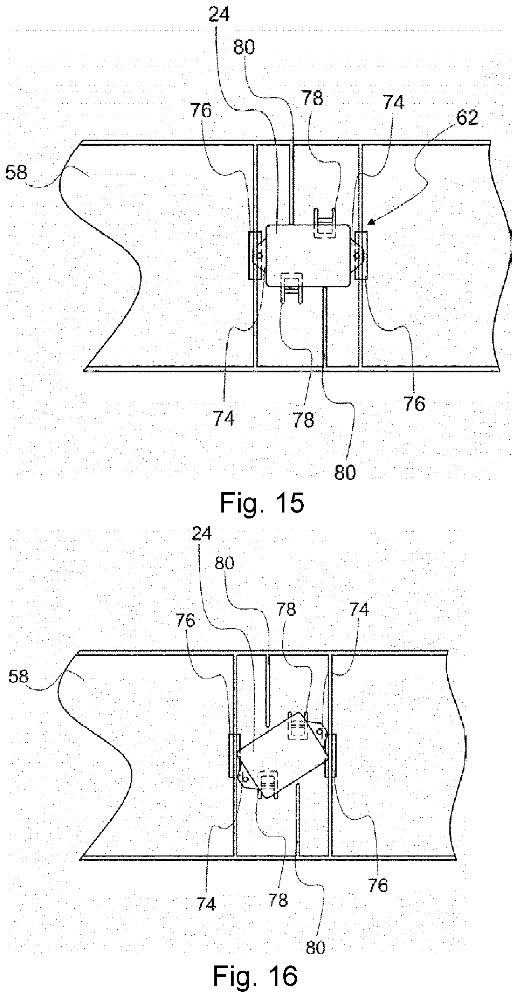

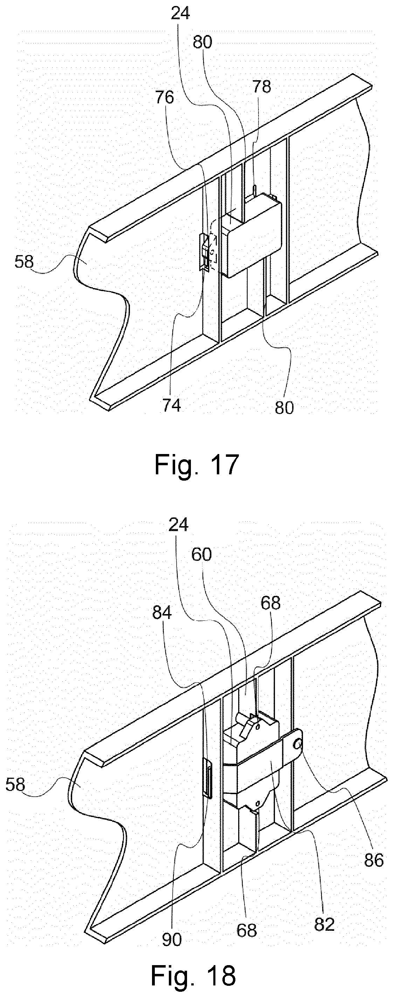

Fig. 15, Fig. 16 und Fig. 17 zeigen die erste Seitenwand 6 in der dritten Ausführungsform in einer dritten Variante, wobei Fig. 15 einen verrasteten Zustand des Sensors 24 in der Aufnahmegeometrie 62 darstellt und Fig. 16 einen unverrasteten Zustand des Sensors 24 in der Aufnahmegeometrie 62 darstellt. Fig. 17 ist eine perspektivische Ansicht des verrasteten Zustands. Der Sensor 24 beinhaltet Befestigungsflächen 74, die in dem verrasteten Zustand in Fig. 15 und Fig. 17 hinter Rückhalteabschnitten 76 positioniert sind. Die Rückhalteabschnitte 76 verhindern eine Bewegung des Sensors normal zu der ersten Seitenwand 6. An der ersten Seitenwand 6 sind Seitenwandabschnittsrasthaken 78 ausgebildet. Bei den Seitenwandabschnittsrasthaken 78 handelt es sich um vorzugsweise federnde Rastelemente, die, zusammen mit Versteifungsstützstreben 80 eine Bewegung des Sensors 24 parallel zu der ersten Seitenwand 6 verhindern. Der Sensor 24 wird, wie in Fig. 16 gezeigt, bei einem Einsetzvorgang in einer definierten Einsetzposition eingesetzt. In der Einsetzposition drückt der Sensor die Seitenwandabschnittsrasthaken 78 in Richtung des Seitenwandabschnitts 6. Durch Drehung des Sensors 6 werden anschließend die Seitenwandabschnittsrasthaken 78 hinter die Rückhalteabschnitte 76 gebracht. In der Rastposition werden die Seitenwandabschnittsrasthaken 78 durch eine Federkraft zurück in ihre Ausgangsposition gebracht und fixieren damit den Sensor 24. In der Rastposition kontaktieren zusätzlich die Versteifungsstützstreben den Sensor 24.

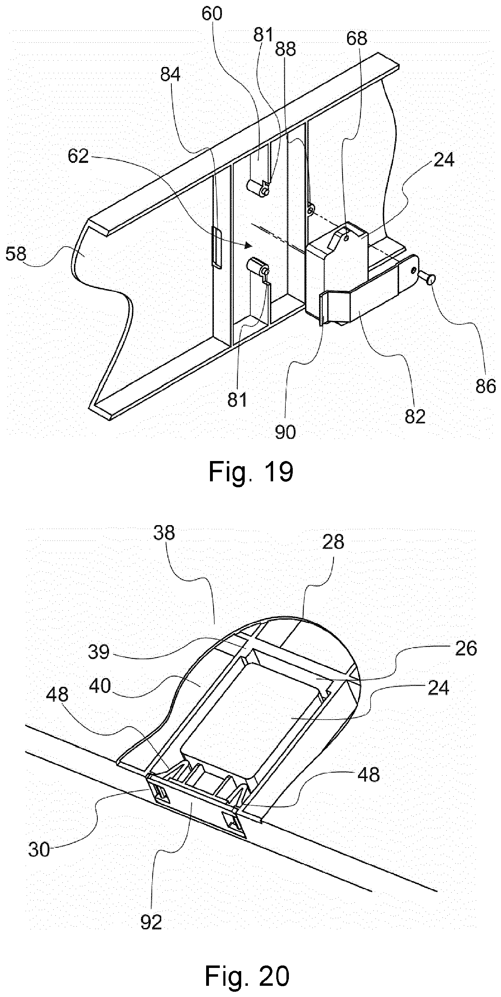

Fig. 18 und Fig. 19 zeigen die ersten Seitenwand 6 in der dritten Ausführungsform in einer vierten Variante, wobei Fig. 18 einen montierten Zustand darstellt und Fig. 19 einen unmontierten Zustand darstellt. Die Aufnahmegeometrie 62, die an der Seitenwand 6 ausgebildet ist, beinhaltet in der vierten Variante zwei stiftförmige Aufnahmen 81 die vorgesehen und ausgebildet sind, in die Sensordurchgangslöcher 68 des Sensors 24 einzugreifen. Ferner beinhaltet die Aufnahmegeometrie 62 in der vierten Variante einen Fixierungsbügel 82, der vorgesehen und ausgebildet ist, in einen Fixierungsbügelausbruch 84 der ersten Seitenwand 6 einzugreifen und mittels einer Fixierungsbügelschraube 86, welche in ein Fixierungsbügelgewindeloch 88 eingeschraubt ist. In einem montierten Zustand sind die stiftförmigen Aufnahmen 81 in den Sensordurchgangslöchern 68 des Sensors 24 positioniert. Der Sensor 24 liegt plan an der ersten Seitenwand 6 an bzw. ist im Wesentlichen parallel zu der ersten Seitenwand 6 orientiert. Der Fixierungsbügel 82 ist mit einer Fixierungsbügeleingriffskante 90 in dem Fixierungsbügelausbruch 84 der ersten Seitenwand 6 angeordnet und wird von der Fixierungsbügelschraube 86, welche in das Fixierungsbügelgewindeloch 88 eigeschraubt ist, in Richtung zu der ersten Seitenwand 6 verschraubt. Hierbei umgreift der Fixierungsbügel 82 den Sensor 24 und fixiert den Sensor 24 in einer Richtung normal zu der ersten Seitenwand 6. Durch den Fixierungsbügel 82 und die stiftförmigen Aufnahmen 81 in den Sensordurchgangslöchern 68 ist der Sensor fest mit der ersten Seitenwand 6 verbunden.

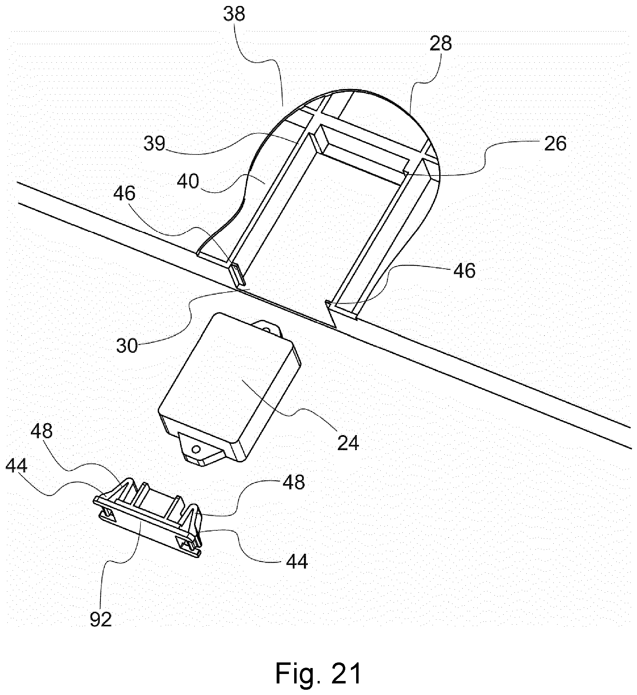

Nachfolgend wird anhand von Fig. 20, Fig. 21 und Fig. 22 ein nicht erfindungsgemäßer Mehrwegtransportbehälter 2 mit einer Sensoraufnahme 26, welche mit einem Deckel 92 verschlossen ist, wobei der Deckel 92 in einem montierten Zustand plan mit dem Seitenwandabschnitt abschließt, beschrieben. Auf die erneute Beschreibung von Elementen, die denen der allgemeinen Ausführungsform entsprechen, wird verzichtet. Es wird im Folgenden insbesondere auf Unterschiede zu der allgemeinen Ausführungsform eingegangen. Es wird exemplarisch die Befestigung des Sensors 24 an der ersten Seitenwand 6 beschrieben. Der Sensor 24 kann jedoch an jedem beliebigen Seitenwandabschnitt des Mehrwegtransportbehälters 2 befestigt sein.

Im Detail zeigen Fign. 20 bis 22 einen Ausschnitt der ersten Seitenwand 6 in einer vierten Ausführungsform. Die erste Seitenwand 6 in Fign. 20 bis 22 ist mit einem (grafischen) Ausbruch 28 zu einer besseren Veranschaulichung in einem Bereich der Sensoraufnahme 26 dargestellt. In Fign. 20 bis 22 ist in dem Ausbruch 28 ein innerer Aufbau der ersten Seitenwand 6 ersichtlich. Die erste Seitenwand 6 beinhaltet die erste Deckschicht 38, die zweite Deckschicht 40 und die Stützstruktur 39, wobei die Stützstruktur die erste Deckschicht 38 und die zweite Deckschicht 40 miteinander verbindet. Innerhalb der Stützstruktur 39 ist die Sensoraufnahme 26 ausgebildet. Anders ausgedrückt ist die Sensoraufnahme 26 zwischen der ersten Deckschicht 38 und der zweiten Deckschicht 40 ausgebildet. Die Sensoraufnahme 26 ist ausgebildet, den Sensor 24 insbesondere vollständig aufzunehmen. Die Sensoraufnahme 26 beinhaltet die Sensoraufnahmeöffnung 30. Eine Innengeometrie der Sensoraufnahme 26 kann auf Abmessungen des Sensors 24 abgestimmt sein.

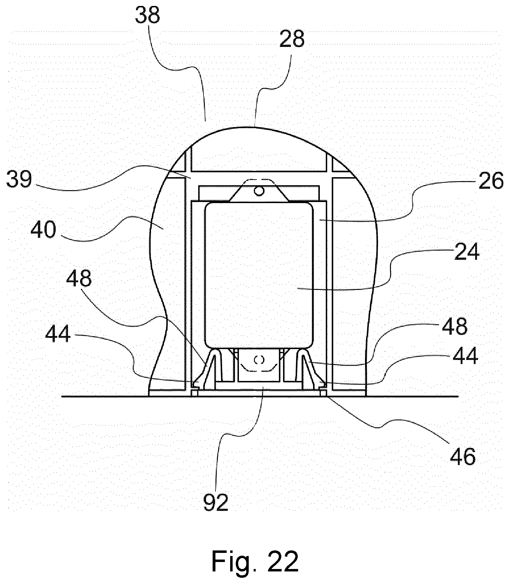

Die Sensoraufnahme 26 der vierten Ausführungsform ist mit dem Deckel 92 verschlossen. Insbesondere verschließt der Deckel 92 die Sensoraufnahmeöffnung 30. Fig. 20 und Fig. 22 zeigen eine Ansicht mit Rasthaken 44 an dem Deckel 92 in einem Zustand, in dem die Rasthaken 44 in einem Rastabschnitt 46 der Sensoraufnahme 26 verrastet sind. Die Rasthaken 44 sind mit Federhebeln 48 verbunden bzw. stoffeinstückig ausgebildet. Die Federhebel 48 drücken die Rasthaken 44 so hinter die Rastabschnitte 46 der Sensoraufnahme 26, dass der Deckel 92 formschlüssig in der Sensoraufnahme 26 fixiert ist. Durch ein Zusammendrücken der Federhebel 48 durch einen Bediener können die Rasthaken in Richtung der Sensoraufnahmeöffnung 30 bewegt werden und der Adapter 36 kann dann aus der Sensoraufnahme 26 entfernt werden. Der Deckel 92 schließt in einem geschlossenen Zustand bündig mit der Seitenwand 6 ab.

In einer bevorzugten Weiterbildung der vierten Ausführungsform kann der Deckel 92 bzw. die Geometrie des Deckels 92 auf die Abmessungen des Sensors 24 angepasst sein, so dass der Sensor 24 im Wesentlichen spielfrei formschlüssig in der Sensoraufnahme 26 fixiert ist.

Die hier beschriebene vierte Ausführungsform weist den Deckel 92 an einer Kante der ersten Seitenwand 6 auf. Der Deckel 92 kann explizit auch in der ersten Deckschicht 38 und / oder der zweiten Deckschicht 40 ausgebildet sein.

Eine Wandstärke des Deckels 92 kann geringer sein als die Wandstärke der ersten Deckschicht 38 und die Wandstärke der zweiten Deckschicht 40.

In einer weiteren, nicht dargestellten Ausführungsform kann die Sensoraufnahme mittels Formblasen erzeugt werden.

### Bezugszeichenliste

- 2: Mehrwegtransportbehälter
- 4: Boden
- 6: erste Seitenwand
- 8: zweite Seitenwand
- 10: Standkufe
- 12: erste Gabelöffnung
- 14: zweite Gabelöffnung
- 16: Öffnungsrand
- 18: Rastkante
- 20: erste Klappe
- 22: zweite Klappe
- 24: Sensor
- 26: Sensoraufnahme
- 28: Ausbruch
- 30: Sensoraufnahmeöffnung
- 32: Scharnierkante
- 34: Scharnierelement
- 36: Adapter
- 38: erste Deckschicht
- 39: Stützstruktur
- 40: zweite Deckschicht
- 41: Positionierungssteg
- 42: Positionierungshilfe
- 44: Rasthaken
- 46: Rastabschnitt
- 48: Federhebel
- 50: Adapterboden
- 51: Sensorrastgeometrie
- 52: Adapterseitenwand
- 54: Stufe
- 56: Aufnahmegeometrie
- 58: Wandfläche
- 60: Versteifungselement
- 62: Aufnahmegeometrie
- 64: Gewindeloch
- 66: Schraube
- 68: Sensordurchgangsloch
- 70: Seitenwanddurchgangsloch
- 72: Rastniete
- 74: Befestigungsfläche
- 76: Rückhalteabschnitt
- 78: Seitenwandabschnittsrasthaken
- 80: Versteifungsstützstreben
- 81: stiftförmige Aufnahme
- 82: Fixierungsbügel
- 84: Fixierungsbügelausbruch
- 86: Fixierungsbügelschraube
- 88: Fixierungsbügelgewindeloch
- 90: Fixierungsbügeleingriffskante
- 92: Deckel
- 6.1: (vollständig) aufgerichtete Stellung
- 6.2: Stellung während des Klappvorgangs
- 6.3: nicht-aufgerichtete Stellung

## Patentansprüche

1. Mehrwegtransportbehälter (2) mit
einem Boden (4) und daran angeordneten klappbaren und / oder faltbaren Seitenwandabschnitten (6, 8), welche in eine aufgerichtete Stellung, in der die Seitenwandabschnitte (6, 8) im Wesentlichen senkrecht zum Boden (4) stehen, und in eine nicht-aufgerichtete Stellung, in der die Seitenwandabschnitte (6, 8) umgeklappt oder zusammengefaltet sind, bringbar sind, wobei die Seitenwandabschnitte (6, 8) doppelwandig als Doppelwandung ausgebildet sind;
zumindest einem Sensor (24), der konfiguriert ist, zwischen der aufgerichteten Stellung und der nicht-aufgerichteten Stellung zumindest eines Seitenwandabschnitts (6, 8) zu unterscheiden; und
einer mit dem zumindest einen Sensor (24) gekoppelten oder in diesen integrierten Sendeeinrichtung, die konfiguriert ist, entsprechend der vom Sensor (24) detektierten Stellung unterschiedliche Signale auszugeben;
wobei der zumindest eine Seitenwandabschnitt (6, 8), der den Sensor (24) beinhaltet, eine Sensoraufnahme (26) innerhalb der Doppelwandung beinhaltet, die ausgebildet ist, den Sensor aufzunehmen,
**dadurch gekennzeichnet, dass**
der Sensor (24) mittels eines Adapters (36) in der Sensoraufnahme (26) fixiert ist.

2. Mehrwegtransportbehälter (2) nach Anspruch 1, **dadurch gekennzeichnet, dass** der Sensor (24) ein Lagesensor ist.

3. Mehrwegtransportbehälter (2) nach Anspruch 2, **dadurch gekennzeichnet, dass** sich die Orientierungen des Lagesensors in der aufgerichteten Stellung des zumindest einen Seitenwandabschnitts (6, 8) und in der nicht-aufgerichteten Stellung des zumindest einen Seitenwandabschnitts (6, 8) um ungefähr 90° unterscheiden.

4. Mehrwegtransportbehälter (2) nach einem der Ansprüche 1 bis 3, **dadurch gekennzeichnet, dass** der Sensor (24) vollständig und ohne Überstand in dem Seitenwandabschnitt (6, 8) aufgenommen ist.

5. Mehrwegtransportbehälter (2) nach einem der Ansprüche 1 bis 4 , **dadurch gekennzeichnet, dass** eine Sensoraufnahmeöffnung (30) an einer Scharnierkante (32) des Seitenwandabschnitts (6, 8) ausgebildet ist.

6. Mehrwegtransportbehälter (2) nach einem der Ansprüche 1 bis 5, **dadurch gekennzeichnet, dass** eine Materialstärke der Doppelwandung, insbesondere eine Materialstärke von Deckschichten (38, 40) der Doppelwandung, in einem Bereich der Sensoraufnahme (26) reduziert ist.

7. Mehrwegtransportbehälter (2) nach einem der Ansprüche 1 bis 6, **dadurch gekennzeichnet, dass** der Adapter (36) formschlüssig in der Sensoraufnahme (26) des zumindest einen Seitenwandabschnitts (6, 8), vorzugsweise reversibel, verrastet.

8. Mehrwegtransportbehälter (2) nach einem der Ansprüche 1 bis 7, **dadurch gekennzeichnet, dass** der Adapter (36) eine Positionierungshilfe (42) aufweist, durch welche der Adapter (36) in ausschließlich einer definierten Einsetzorientierung in die Sensoraufnahme (26) eingesetzt werden kann.

9. Mehrwegtransportbehälter (2) nach einem der Ansprüche 1 bis 8, **dadurch gekennzeichnet, dass** der Adapter (36) eine Sensorrastgeometrie (51) aufweist, in welche der Sensor (24) in dem Adapter (36), vorzugsweise reversibel, verrastet.

10. Mehrwegtransportbehälter (2) nach einem der Ansprüche 1 bis 9, **dadurch gekennzeichnet, dass** die Sensoraufnahme (26) mit einem Deckel (92) verschlossen ist, wobei der Deckel (92) in einem montierten Zustand plan mit dem Seitenwandabschnitt (6, 8) abschließt.

11. Verwendung eines Adapters (36) zur Fixierung eines Lagesensors (24) in einem klappbaren und / oder faltbaren Seitenwandabschnitt (6, 8) eines Mehrwegtransportbehälters (2), um anhand einer Orientierung des Lagesensors zu bestimmen, ob sich der klappbare und / oder faltbare Seitenwandabschnitt (6, 8) in einer aufgerichteten Stellung oder einer nicht-aufgerichteten Stellung befindet, und so einen Lagerzustand des Mehrwegtransportbehälters zu ermitteln.

## Claims

1. A reusable transport container (2) comprising:
a base (4) and foldable and/or collapsible side panel sections (6, 8) arranged on the base (4), which can be brought into an upright position in which the side panel sections (6, 8) are substantially perpendicular to the base (4), and into a non-upright position in which the side panel sections (6, 8) are folded or collapsed, wherein the side panel sections (6, 8) are formed to be double-paneled as a double panel , wherein the at least one side panel section (6, 8) which contains the sensor (24) contains a sensor holder (26) inside the double panel, which is configured to hold the sensor,
at least one sensor (24) which is configured to distinguish between the upright position and the non-upright position of at least one side panel section (6, 8); and
a transmitting device coupled to or integrated in the at least one sensor (24), which is configured to output different signals corresponding to the position detected by the sensor (24);
**characterized in that**
the sensor (24) is fixed in the sensor holder (26) by means of an adapter (36).

2. The reusable transport container (2) according to claim 1, **characterized in that** the sensor (24) is a position sensor which is formed in and/or on said at least one side panel section (6, 8).

3. The reusable transport container (2) according to claim 2, **characterized in that** orientations of the position sensor in the upright position of the at least one side panel section (6, 8) and in the non-upright position of the at least one side panel section (6, 8) differ by approximately 90°.

4. The reusable transport container (2) according to one of claims 1 to 3, **characterized in that** the sensor (24) is received completely and without a projection in the side panel section (6, 8).

5. The reusable transport container (2) according to one of claims 1 to 4, **characterized in that** a sensor holder opening (30) is formed on a hinge edge (32) of the side panel section (6, 8).

6. The reusable transport container (2) according to one of claims 1 to 5, **characterized in that** a material thickness of the double panel, in particular a material thickness of cover layers (38, 40) of the double panel, is reduced in an area of the sensor holder (26).

7. The reusable transport container (2) according to one of claims 1 to 6, **characterized in that** the adapter (36) is locked positively, preferably reversibly, in the sensor holder (26) of the at least one side panel section (6, 8).

8. The reusable transport container (2) according to one of claims 1 to 7, **characterized in that** the adapter (36) has a positioning aid (42) by which the adapter (36) can be inserted into the sensor holder (26) in exclusively one defined inserting orientation.

9. The reusable transport container (2) according to one of claims 1 to 8, **characterized in that** the adapter (36) has a sensor locking geometry (51) into which the sensor (24) locks, preferably reversibly, in the adapter (36).

10. The reusable transport container (2) according to one of claims 1 to 9, **characterized in that** the sensor holder (26) is closed by a lid (92), wherein the lid (92) is flush with the side panel section (6, 8) when in a mounted state.

11. Use of an adapter (36) for fixing a position sensor (24) in a foldable and/or collapsible side panel section (6, 8) of a reusable transport container (2) to determine, based on an orientation of the position sensor, whether the foldable and/or collapsible side panel section (6, 8) is in an upright position or a non-upright position, and thus to determine a storage state of the reusable transport container.

## Revendications

1. Conteneur de transport réutilisable (2) avec
un fond (4) et des sections de paroi latérale (6, 8) pliables et/ou rabattables agencées dessus qui peuvent être amenées dans une position redressée, dans laquelle les sections de paroi latérale (6, 8) sont sensiblement perpendiculaires au fond (4), et dans une position non redressée, dans laquelle les sections de paroi latérale (6, 8) sont rabattues ou repliées, dans lequel les sections de paroi latérale (6, 8) sont formées à double paroi comme paroi double ;
au moins un capteur (24) qui est configuré afin de distinguer entre la position redressée et la position non redressée au moins d'une section de paroi latérale (6, 8) ; et
un dispositif d'émission couplé à l'au moins un capteur (24) ou intégré dans celui-ci qui est configuré afin d'émettre des signaux différents selon la position détectée par le capteur (24) ;
dans lequel l'au moins une section de paroi latérale (6, 8) qui contient le capteur (24), contient un logement de capteur (26) à l'intérieur de la double paroi qui est configuré afin de recevoir le capteur,
**caractérisé en ce que**
le capteur (24) est fixé au moyen d'un adaptateur (36) dans le logement de capteur (26).

2. Conteneur de transport réutilisable (2) selon la revendication 1, **caractérisé en ce que** le capteur (24) est un capteur de position.

3. Conteneur de transport réutilisable (2) selon la revendication 2, **caractérisé en ce que** les orientations du capteur de position dans la position redressée d'au moins une section de paroi latérale (6, 8) et dans la position non redressée d'au moins une section de paroi latérale (6, 8) se distinguent d'environ 90 °.

4. Conteneur de transport réutilisable (2) selon l'une quelconque des revendications 1 à 3, **caractérisé en ce que** le capteur (24) est reçu complètement et sans porte-à-faux dans la section de paroi latérale (6, 8).

5. Conteneur de transport réutilisable (2) selon l'une quelconque des revendications 1 à 4, **caractérisé en ce qu'**une ouverture de logement de capteur (30) est formée au niveau d'une arête de charnière (32) de la section de paroi latérale (6, 8).

6. Conteneur de transport réutilisable (2) selon l'une quelconque des revendications 1 à 5, **caractérisé en ce qu'**une épaisseur de matériau de la double paroi, en particulier une épaisseur de matériau de couches de recouvrement (38, 40) de la double paroi, est réduite dans une zone du logement de capteur (26).

7. Conteneur de transport réutilisable (2) selon l'une quelconque des revendications 1 à 6, **caractérisé en ce que** l'adaptateur (36) s'encliquète par complémentarité de formes dans le logement de capteur (26) d'au moins une section de paroi latérale (6, 8), de préférence de manière réversible.

8. Conteneur de transport réutilisable (2) selon l'une quelconque des revendications 1 à 7, **caractérisé en ce que** l'adaptateur (36) présente une aide au positionnement (42), par laquelle l'adaptateur (36) peut être inséré dans exclusivement une orientation d'insertion définie dans le logement de capteur (26).

9. Conteneur de transport réutilisable (2) selon l'une quelconque des revendications 1 à 8, **caractérisé en ce que** l'adaptateur (36) présente une géométrie d'encliquetage de capteur (51), dans laquelle le capteur (24) s'encliquète dans l'adaptateur (36) de préférence de manière réversible.

10. Conteneur de transport réutilisable (2) selon l'une quelconque des revendications 1 à 9, **caractérisé en ce que** le logement de capteur (26) est fermé avec un couvercle (92), dans lequel le couvercle (92) ferme dans un état monté de manière plane avec la section de paroi latérale (6, 8).

11. Utilisation d'un adaptateur (36) pour la fixation d'un capteur de position (24) dans une section de paroi latérale (6, 8) pliable et/ou rabattable d'un conteneur de transport réutilisable (2) afin de déterminer à l'aide d'une orientation du capteur de position si la section de paroi latérale (6, 8) pliable et/ou rabattable se trouve dans une position redressée ou une position non redressée, et de définir ainsi un état de stockage du conteneur de transport réutilisable.
